# FASCICULE DE BREVET EUROPEEN

(11) **EP 1 779 920 B1**
(45) Date de publication et mention de la délivrance du brevet: **02.03.2011**
(21) Numéro de dépôt: 06291685.3
(22) Date de dépôt: 30.10.2006
(51) Int. Cl.: B01D 53/56

(54) **Procédé amélioré de réduction des NOx, dispositif et application au traitement des fumées issues de la combustion des déchets ménagers**
Verfahren zur Reduktion von NOx, Vorrichtung und Verwendung zur Behandlung des Rauchs aus einer Hausmüllverbrennung
Improved process for the removal of NOx, apparatus, and application to the treatment of smokes from a household waste combustion process

(30) Priorité: 31.10.2005 EP 05300882
(43) Date de publication de la demande: 02.05.2007
(73) Titulaire: CONSTRUCTIONS INDUSTRIELLES DE LA MEDITERRANEE- CNIM, F-75008 Paris (FR)
(72) Inventeur: Laborel, Yann, 13260 Cassis (FR)
(74) Mandataire: Delaveau, Sophie

(56) Documents cités:
- EP-A- 0 615 777
- DE-A1- 3 027 606
- DE-A1- 4 014 388
- US-A- 4 756 890
- US-A- 5 728 357

## Description

La présente invention concerne principalement un procédé de réduction des NOx dans un gaz en contenant.

L'invention concerne également un dispositif pour mettre en oeuvre ce procédé et trouve notamment application dans le traitement des fumées provenant de la combustion des déchets ménagers.

Les oxydes d'azotes (NOx) sont constitués principalement par le monoxyde d'azote (NO) et le dioxyde d'azote (NO₂) qui se forment lors des combustions à températures élevées.

La réduction de ces anhydrides d'acides est nécessaire pour diminuer leur émission dans l'atmosphère dont résultent notamment les pluies acides et les brouillards photochimiques.

Les NOx formés lors de la combustion des déchets ménagers sont essentiellement des NOx dits 'combustibles' qui se forment par oxydation de l'azote constituant le comburant et des NOx dits 'thermiques' qui se forment par réaction entre l'azote gazeux constituant l'air de combustion et les radicaux oxygène et hydroxyde dans la flamme.

La concentration des NOx dans les gaz de combustion est de l'ordre de 300 à 500 mg d'équivalent NO₂/N.m³ et le monoxyde d'azote est l'espèce majoritaire puisque représentant environ 95% des NOx total.

Sont connus des traitements dits primaires permettant de réduire les NOx par optimisation du processus de combustion de façon à limiter la formation d'oxydes d'azote.

Est également connu un traitement dit secondaire consistant à réduire chimiquement les oxydes d'azotes présents dans les gaz en les faisant réagir avec de l'ammoniaque.

L'inconvénient majeur de ce dernier traitement réside dans l'utilisation d'ammoniaque qui peut également être considéré comme un polluant.

US-A-4 756 890 décrit un procédé de réduction des NOx dans un gaz issu d'une chambre de combustion dans lequel il est prévu d'injecter un agent réducteur de NOx dans une zone du gaz dont la température est comprise entre 1200 et 2000°F soit environ 650 à 1100°C, cette température étant ajustée par des convertisseurs thermiques en amont de la zone d'injection. Dans un mode de réalisation particulier, l'agent réducteur est constitué de particules solides d'urée. Selon ce procédé, l'injection d'urée s'effectue en aval de la chambre de combustion, à l'entrée d'un séparateur entraînant en mouvement cyclonique le gaz issu de la chambre de combustion, le jet d'urée étant introduit dans le cyclone au moyen d'injecteurs.

Cependant, ce document antérieur nécessite l'utilisation de convertisseurs thermiques d'ajustement de température de la zone du gaz dans laquelle est injecté l'agent réducteur de NOx et la production d'un mouvement cyclonique entraînant le gaz issu de la chambre de combustion.

DE 40 14 388 décrit un procédé de réduction des NOx et SOx issus d'une chambre de combustion et qui consiste à injecter simultanément à la sortie de cette chambre dans une chambre de réaction, des agents réducteurs de NOx et de SOx au moyen de ports pour traiter le gaz de combustion à une température comprise entre 600 et 900 °C. Pour traiter les NOx, il est prévu d'utiliser de fines particules d'urée qui agissent sur les NOx en coopération avec les réducteurs de Sox tels que le carbonate de calcium et l'hydroxyde de calcium. Dans ce procédé, la température de la chambre de réaction est maintenue à la température souhaitée par des réchauffeurs électriques.

Ce document antérieur nécessite également des réchauffeurs électriques dans la veine gazeuse pour pouvoir injecter l'urée à une température spécifique.

US-A-5 728 357 décrit un procédé de réduction des NOx générés dans un four rotatif de fabrication de ciment consistant à injecter des billes d'urée dans une zone du four dont la température est comprise entre 900 et 1100 °C au moyen d'un compresseur.

Ce document antérieur concerne ainsi un domaine technique tout à fait différent de celui du traitement de fumées issues de la combustion de déchets ménagers.

L'invention a pour but de remédier aux inconvénients ci-dessus de l'art antérieur et propose un procédé à la fois économique, simple et utilisant des espèces chimiques non polluantes de façon à réduire significativement la quantité d'oxydes d'azote présents dans un gaz sans entraîner la formation d'espèces secondaires polluantes.

A cet effet, le procédé de l'invention est caractérisé par les étapes telles que définies dans la revendication 1.

Ce procédé de réduction non catalytique permet de réduire considérablement les NOx présents dans un gaz sans produire d'espèces secondaires nocives.

En outre, les jets de billes d'urée peuvent comprendre chacun au moins un nuage principal et deux nuages secondaires de billes d'urée.

On peut prévoir que la mesure de la température du gaz consiste à mesurer l'énergie émise par les gaz pour générer un signal de température.

On peut également prévoir que l'évaluation de la température du gaz consiste à comparer le débit de vapeur dudit gaz avec le débit de vapeur nominal de l'installation et à déterminer ainsi la zone d'injection des billes d'urée.

De façon avantageuse, le procédé de l'invention prévoit une étape de sélection des jets d'urée dans la zone d'injection du gaz selon la température mesurée.

De façon également avantageuse, les billes d'urée sont injectées au moyen d'air pressurisé.

Avantageusement, les jets de billes d'urée peuvent être répartis selon au moins deux niveaux parmi lesquels un seul niveau est sélectionné pour assurer l'injection des billes d'urée selon la température du gaz mesurée ou évaluée à ce niveau.

Dans ce cas, les billes d'urée sont avantageusement injectées par le niveau haut, soit lorsque la zone du gaz dont la température est comprise entre 850°C et 1000°C est proche de ce niveau haut ou soit lorsque le débit de vapeur mesuré correspond au débit de vapeur de la charge nominale ou bien que le débit de vapeur mesuré est inférieur au débit de vapeur nominal en étant supérieur à 80% de ce débit de vapeur nominal, et les billes d'urée sont injectées par le niveau bas, soit lorsque la zone du gaz dont la température est comprise entre 850°C et 1000°C est proche de ce niveau bas ou soit lorsque le débit de vapeur mesuré est inférieur à 80% du débit de vapeur nominal.

L'invention porte également sur un dispositif pour mettre en oeuvre le procédé et tel que défini dans la revendication 9.

Avantageusement, l'extrémité libre d'injection des buses comporte deux ouvertures latérales longitudinales diamétralement opposées s'étendant dans le plan de l'injection depuis l'orifice de sortie de la dite extrémité d'injection.

De préférence, l'extrémité libre d'injection comporte un éclateur permettant de générer deux nuages secondaires de jets d'urée répartis de part et d'autre d'un nuage principal circulant à travers l'orifice de sortie.

Dans ce cas, il peut être prévu que l'éclateur soit de section transversale triangulaire et s'étende perpendiculairement au plan d'injection de façon que l'une de ses faces soit orientée vers l'orifice de sortie.

De façon avantageuse, les buses sont montées affleurantes à une chambre de combustion et réparties sur au moins deux niveaux pourvus chacun d'au moins une buse.

De préférence dans ce cas, le dispositif de l'invention comporte un sélecteur du niveau de buses par lequel les billes d'urée sont injectées à un niveau donné selon la température du gaz à ce niveau.

Par ailleurs, il est possible de prévoir des moyens d'orientation des buses par lesquelles les billes d'urée sont injectées dans le gaz selon la température du gaz mesurée.

De façon avantageuse, la mesure de la température du gaz est effectuée par un pyromètre optique, qui mesure l'énergie émise par le gaz dans la longueur d'onde des Nox à partir de laquelle la température d'une zone du gaz est évaluée.

Egalement de façon avantageuse, le dispositif comprend également des surpresseurs qui génèrent de l'air pressurisé servant notamment d'air de transport des billes d'urée vers les buses actives.

De préférence, les buses inactives sont soient refroidies par l'air pressurisé généré par les surpresseurs, soit maintenues à distance des températures élevées par des moyens de retrait automatique.

L'invention est également dirigée vers l'utilisation du procédé et du dispositif décrits précédemment pour le traitement des fumées issus de la combustion des déchets ménagers préparés ou non.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de l'invention et sur lesquels :
- la figure 1 est une représentation schématique du dispositif de l'invention,
- la figure 2 est une représentation de coté d'une buse utilisée dans le dispositif de l'invention,
- la figure 3 est une représentation d'une buse en coupe selon l'axe XX' de la figure 2, et
- la figure 4 est une représentation en perspective selon la flèche notée IV sur la figure 3.

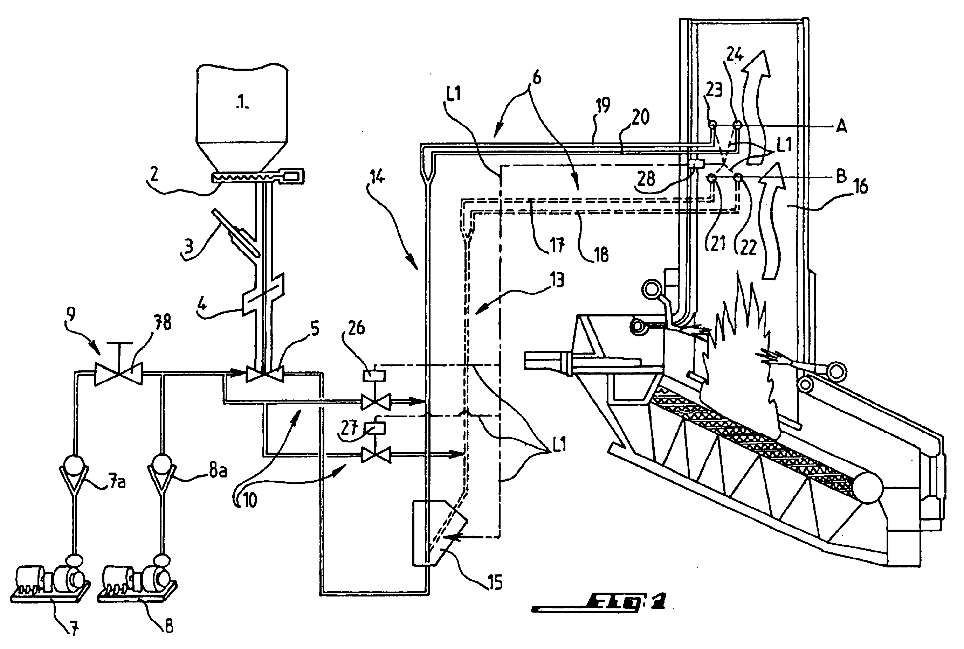

En référence à la figure 1, un sac de conditionnement 1, qui repose sur un trémie de réception 2 autorisant, sur commande, le passage des billes d'urée vers un détecteur de bourrage 3 qui contrôle la fluidité d'écoulement des billes, jusqu'à un filtre 4 duquel les billes d'urée filtrées s'écoulent jusqu'à une vanne d'introduction 5 qui autorise, sur commande également, l'introduction de ces billes dans le circuit d'injection 6 vers la chambre de combustion 16.

Il est à noter que les billes d'urée peuvent être également stockées dans un silo non représenté.

Deux surpresseurs 7,8 produisent de l'air pressurisé qui circule dans le circuit d'air de pulvérisation 9 en passant par deux clapets anti-retour 7a, 8a et une vanne 78.

Cet air pressurisé circule, d'une part jusqu'à la vanne d'introduction 5 formant entrée de l'air pressurisé dans le circuit d'injection 6, et d'autre part jusqu'à des première 26 et deuxième 27 électrovannes formant entrée de l'air pressurisé dans un circuit de balayage d'air 10 dont la fonctionnalité sera décrite plus loin.

Le circuit d'injection 6 comprend un circuit d'injection de niveau bas 13 et un circuit d'injection de niveau haut 14 qui peuvent être sélectivement activés par un sélecteur de niveau 15 disposé en aval de la vanne d'introduction 5, pour procéder à l'injection des billes d'urée dans la chambre de combustion 16 soit à un niveau haut A, soit à un niveau bas B.

Sur la figure 1, c'est le circuit d'injection de niveau haut 14 qui est actif, les billes d'urée étant ainsi introduites dans la chambre de combustion 16 par le niveau haut A.

Chaque circuit d'injection bas 13 et haut 14 comprend deux sous-circuits d'injection respectifs 17,18 et 19,20 au bout de chacun desquels une buse d'injection correspondante 21,22 et 23,24 est montée affleurante à la chambre de combustion 16.

De cette façon, les paires de buses d'injection 21,22 du circuit d'injection bas 14 sont disposées sur le niveau bas B et les paires de buses du circuit d'injection haut 23,24 sont disposées sur le niveau haut A.

Par ailleurs, les buses 21,22,23,24 sont positionnées dans la chambre de combustion de façon que la répartition du jeu d'urée soit optimum sans que la température de la chambre de combustion ne dégrade ces buses.

L'homme du métier saura positionner ces buses de manière appropriée, par exemple au moyen de brides, dont l'une d'entre elle est fixée à cette chambre de combustion 16.

La hauteur de cette chambre de combustion 16 est comprise entre 10 et 25 mètres pour un diamètre et une profondeur de plusieurs mètres. Le débit attendu dans une telle chambre est compris entre 50 000 m³/h et 500 000 m³/h dans des conditions normales.

Le dispositif de l'invention comporte également un circuit d'air de balayage 10 destiné à assurer la circulation d'air pressurisé provenant du circuit d'air de pulvérisation 9, dans le circuit d'injection bas 13 représenté inactif sur cette figure, afin de protéger les buses inactives 23,24 du rayonnement provenant de la chambre de combustion 16.

Ce circuit d'air de balayage 10 comporte des première 26 et deuxième 27 électrovannes qui assurent, sur commande, le passage de l'air pressurisé depuis le circuit d'air de pulvérisation 9 jusqu'à ces buses 23,24 inactives.

Le dispositif de l'invention comprend également un pyromètre optique 28 qui mesure l'énergie émise par les gaz issus des fumées par exemple dans la longueur d'onde des NOx afin de générer un signal de température et de connaître la température du gaz en une zone précise de la chambre de combustion 16.

Ce pyromètre 28 est relié à un calculateur et à un dispositif de commande non représenté qui actionnent, selon la température du gaz mesuré, le sélecteur de niveau 15, l'une ou les deux électrovannes 26, 27, ainsi que l'orientation et l'inclinaison des buses actives 21,22 au moyen d'un vérin électrique avec positionneur également non représenté, par l'intermédiaire de liaisons L1 représentées schématiquement par des traits mixtes et qui peuvent être de type filaire ou par voie hertzienne.

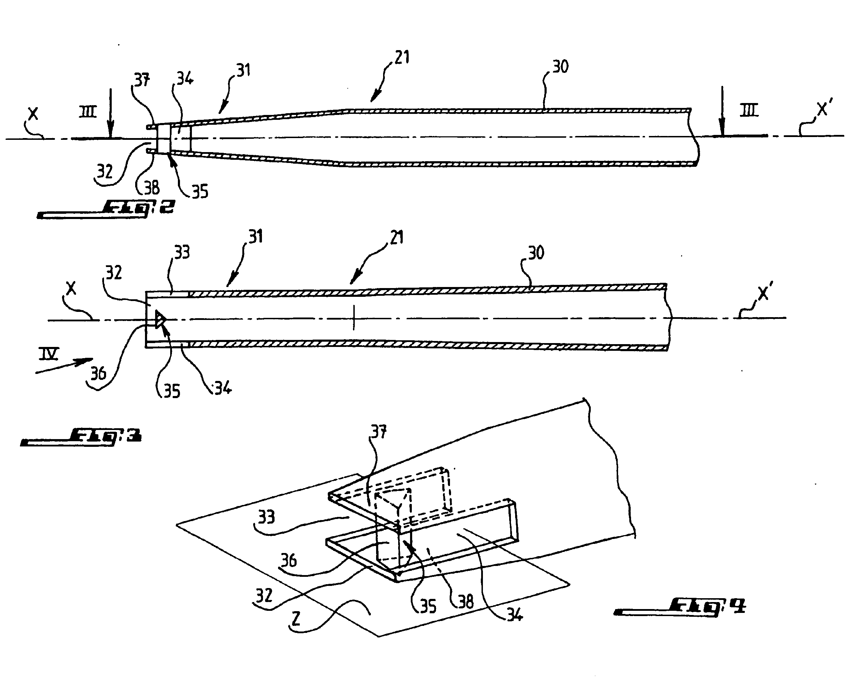

En référence aux figures 2, 3 et 4, les buses 21, 22,23,24, référencées pour simplifier uniquement 21 sur ces figures, se présentent sous la forme d'un tube 30 dont les deux parois supérieure 37 et inférieure 38 de l'extrémité libre d'injection 31 convergent l'une vers l'autre ce qui confère à cette extrémité libre d'injection 31 une forme aplatie visible sur la figure 4.

De plus, l'extrémité libre d'injection 31 comporte deux ouvertures latérales longitudinales diamétralement opposées 33,34 s'étendant dans le plan de l'injection Z depuis l'orifice de sortie 32.

De cette façon, le jet de billes d'urée est aplati ce qui permet de limiter l'écart de température au sein d'un même jet de billes d'urée et donc de spécifiquement diriger le jet d'urée vers la zone de température optimale.

Par ailleurs, l'extrémité libre d'injection 31 comporte également un éclateur prismatique 35 de section transversale triangulaire qui s'étend perpendiculairement au plan d'injection Z de façon que l'une de ses faces 36 soit orientée vers l'orifice de sortie 32.

Cet éclateur 35 permet de générer deux nuages de billes supplémentaires qui s'écoulent à travers les ouvertures latérales 32,34 de part et d'autre d'un nuage principal qui circule à travers l'orifice de sortie 32.

La caractérisation des billes d'urée utilisées dans le procédé et le dispositif de l'invention est donnée ci-après.
Désignation : urée en grain
Formulation chimique : CO(NH₂)₂
Masse molaire (g) : 60
Apparence : perles, -granulés translucides - pH d'une solution à 10% : de 8 à 10 max.
Azote (N) : > 46,20%
Humidité : < 0,50%
Biuret : 0,60%
Formaldéhyde (durcisseur) : entre 0,15% et 0,3%
Fer : < 5 ppm
Mercure et Arsenic (As) : tous < 0,01 ppm
Cadmium (Cd) : < 0,2 ppm
Chrome, Nickel et Plomb : tous < 2 ppm
Cendres : < 20 ppm
Cuivre (Cu) : < 0,5 ppm
insolubles dans l'eau : < 15 ppm

### GRANULOMETRIES

### Type 1

"Au tamis à mailles carrées" 1 < diamètre < 2,5 mm : > 95% masse
diamètre médian significatif 1,7 mm +/- 0,2 mm
fines (inf à 1) < 2% masse

### Type 2

"Au tamis à mailles carrées" 2 < diamètre < 5 mm : > 93% masse
5% diamètre supèrieur à 5mm
fines (inf à 2 mm) < 2% masse

### CARACTERISTIQUES PHYSIQUES

densité apparente :
- compactée : 750-800 kg/m³
- non compactée : 700-750 kg/m³

### CONDITIONNEMENT EN BIG BAG

volume : (500 ou 1000 kg) soit environ 1 ou 2 m³
section : 1,2 m par 1,2 m
Enveloppe externe (polypropylène) résistant au déchirement
Enveloppe interne (polyéthylène) de protection contre l'humidité

Le fonctionnement du dispositif représenté sur les figures est décrit ci-dessous.

Il a été trouvé, dans le cadre de l'invention, que la réduction significative des NOx pouvait être obtenue par réaction de ces NOx avec des billes d'urée à une température comprise entre 850°C et 1000°C.

Au-dessous de 850°C, les réactions avec l'urée génèrent la formation d'ammoniaque, et au-delà de 1000°C, l'urée se décompose en monoxyde d'azote.

Dans le dispositif de l'invention représenté sur la figure 1, la température du gaz issu des fumées est mesurée par le pyromètre optique 28.

La connaissance du gradient de température en °C/m parcouru par les gaz à partir du point de mesure du pyromètre et de l'écart de hauteur moyenne du jet d'urée au centre du foyer selon l'inclinaison des buses 21,22,23,24 permet d'évaluer le circuit d'injection bas 13 ou haut 14 qui doit être activé ainsi que l'inclinaison des buses actives correspondantes 21,22, 23,24.

Le dispositif de commande non représenté actionne le sélecteur de niveau 15 afin d'envoyer les billes d'urée véhiculées par l'air pressurisé, soit dans le circuit d'injection bas 13 soit dans le circuit d'injection haut 14 et actionne également le vérin électrique non représenté pour que les buses actives 21,22 de la figure 1 soient de l'inclinaison nécessaire pour le jet d'urée soit en contact avec une zone d'injection du gaz dont la température est comprise entre 850 et 1000°C.

Plus précisément, pour ce qui est de l'inclinaison des buses au niveau de l'un des circuits haut 14 ou bas, le pyromètre mesure la température dans une zone représentative du foyer, par exemple à mi-hauteur, où on peut s'attendre à trouver une température théorique des gaz de par exemple 900°C, cette température étant définie lors de la première mise en route du système et correspondant à une injection horizontale des billes d'urée au niveau du circuit considéré.

Cette mesure permet de commander la position des buses.

En effet, un calculateur non représenté est apte à recueillir cette mesure de température et lorsque cette mesure fait apparaître une température supérieure à 900°C par exemple de 950°C, connaissant le gradient de température en °C par mètres parcouru par les gaz approximativement au milieu du foyer qui est d'environ 20 à 40°C/m dans un four dont les dimensions sont celles mentionnées plus haut, il est apte à calculer de quel angle les buses du circuit considéré doivent être orientées vers le haut pour que le jet aplati de billes d'urée soit dirigé vers une zone du gaz dont la température est approximativement de 900°C.

Puis le dispositif de commande met en oeuvre l'orientation des buses ainsi que l'injection des billes d'urée à travers ces buses.

Bien entendu, les opérations correspondantes sont effectuées de façon similaire dans le cas où la mesure de la température par le pyromètre fait apparaître une température inférieure à 900°C auquel cas les buses sont commandées pour être orientés vers le bas du foyer selon le calcul évoqué précédemment.

L'orientation proprement dite des buses est assurée par un vérin. Des fins de courses permettent de sécuriser le système.

Par ailleurs, un filtrage de la température prise par le pyromètre permet d'éviter des mouvements trop rapides et trop fréquents du vérin.

De plus, de l'air pressurisé est envoyé dans le circuit d'injection inactif 13 afin de refroidir les buses inactives correspondantes 21,22 exposées à des températures élevées.

Il est possible de prévoir des moyens de retrait non représentés des buses inactives pour les soustraire aux effets des températures élevées.

Dans ce cas, il sera inutile de les refroidir par l'air pressurisé ou par tout autre fluide pneumatique de balayage.

L'homme du métier saura déterminer et mettre en oeuvre les moyens de retrait appropriés.

Le procédé et le dispositif de l'invention permettent de garantir des valeurs d'émission en NOx inférieures à 200 mg d'équivalent NO₂/N.m³ sans que la quantité d'ammoniaque générée par la réaction ne dépasse 10mg/N.m³.

Il peut être prévu, à la place du pyromètre optique, un dispositif non représenté mesurant le débit de vapeur, qui, par comparaison à la valeur nominale du débit de vapeur de l'installation permet également de déterminer la zone d'injection de l'urée.

Dans ce cas, il a été déterminé que si le débit de vapeur mesuré correspond au débit de vapeur de la charge nominale ou si le débit de vapeur mesuré est inférieur au débit de vapeur nominal en étant supérieur à 80% du débit de vapeur nominal, les billes d'urée sont injectées par le circuit d'injection haut 14.

A l'inverse, si le débit de vapeur est inférieur à 80% du débit de vapeur nominal, les billes d'urée sont injectées par le circuit d'injection bas 13.

De cette façon, les billes d'urée sont injectées dans une zone du gaz dont la température est approximativement comprise entre 850 et 1000°C sans qu'aucune mesure de température ne soit prise.

Naturellement, l'homme du métier saura déterminer et mettre en oeuvre un dispositif de mesure du débit de vapeur adapté.

On peut également envisager dans le cadre du procédé et du dispositif selon l'invention, à titre d'exemple, que le basculement du circuit d'injection bas 13 au circuit d'injection haut 14 et inversement est effectué au moyen de la mesure du débit de vapeur et que l'inclinaison des buses au niveau d'un circuit particulier 13,14 soit calculée et commandée à partir de la mesure de la température faite par le pyromètre optique comme détaillé plus haut.

Par ailleurs, le nombre de niveaux A,B ainsi que le nombre de buses 21,22,23,24 par niveau est adapté à la dimension de la chambre de combustion.

Enfin, le dispositif et le procédé décrits précédemment trouvent notamment applications dans le traitement des fumées provenant de la combustion des déchets ménagers préparés ou non mais également pour le traitement de tout gaz contenant des NOx.

## Revendications

1. Procédé de réduction de NOx dans des gaz issus de fumées ascendantes circulant dans une veine gazeuse de chambre à combustion, **caractérisé en ce qu'**il comprend au moins une étape d'évaluation ou de mesure d'une zone du gaz circulant dans la veine gazeuse dont la température est approximativement comprise entre 850°C et 1000°C, et une étape d'injection par voie pneumatique d'un jet de billes d'urée aplati et orienté vers la zone du gaz précédemment évaluée ou mesurée.

2. Procédé selon la revendication 1, dans lequel les jets de billes d'urée comprennent chacun au moins un nuage principal et deux nuages secondaires.

3. Procédé selon l'une quelconque des revendications 1 et 2, dans lequel la mesure de la température du gaz consiste à mesurer l'énergie émise par les gaz pour générer un signal de température.

4. Procédé selon l'une quelconque des revendications 1 et 2, dans lequel l'évaluation de la température du gaz consiste à comparer le débit de vapeur du dit gaz avec le débit de vapeur nominal de l'installation et à déterminer ainsi la zone d'injection des billes d'urée.

5. Procédé selon l'une quelconque des revendications précédentes, comprenant une étape de sélection des jets d'urée dans la zone d'injection du gaz selon la température mesurée ou évaluée.

6. Procédé selon l'une quelconque des revendications précédentes, dans lequel les billes d'urée sont injectées au moyen d'air pressurisé.

7. Procédé selon la revendication 5 ou 6, dans lequel les jets de billes d'urée sont répartis selon au moins deux niveaux (A,B) parmi lesquels un niveau (A,B) est sélectionné pour assurer l'injection des billes d'urée selon la température du gaz mesurée ou évaluée à ce niveau.

8. Procédé selon la revendication 7 dans lequel les billes d'urée sont injectées par le niveau haut (14), soit lorsque la zone du gaz dont la température est comprise entre 850°C et 1000°C est proche de ce niveau haut (14) ou soit lorsque le débit de vapeur correspond au débit de vapeur de la charge nominale ou bien que le débit de vapeur mesuré est inférieur au débit de vapeur nominal en étant supérieur à 80% de ce débit de vapeur nominal,
et dans lequel les billes d'urée sont injectées par le niveau bas (13), soit lorsque la zone du gaz dont la température est comprise entre 850°C et 1000°C est proche de ce niveau bas (13), ou soit lorsque le débit de vapeur mesuré est inférieur à 80% du débit de vapeur nominal.

9. Dispositif pour mettre en ouvre le procédé selon l'une quelconque des revendications 1 à 8, **caractérisé en ce qu'**il comprend des moyens d'évaluation ou de mesure d'une zone du gaz dont la température est approximativement comprise entre 850°C et 1000°C, des moyens d'injection de billes d'urée dans cette zone, ces moyens incluant au moins une buse (21, 22, 23, 24) dont les deux parois supérieure (37) et inférieure (38) de l'extrémité libre d'injection (3) convergent l'une vers l'autre et des moyens d'orientation des billes d'urée dans la dite zone.

10. Dispositif selon la revendication 9, dans lequel l'extrémité libre d'injection (31) des buses (21, 22, 23, 24) comporte deux ouvertures latérales longitudinales diamétralement opposées (33, 34) s'étendant dans le plan de l'injection (Z) depuis l'orifice de sortie (32) de la dite extrémité d'injection (31).

11. Dispositif selon la revendication 10, dans lequel l'extrémité libre d'injection (31) comporte un éclateur (35) permettant de générer deux nuages secondaires de jets d'urée répartis de part et d'autre d'un nuage principal circulant à travers l'orifice de sortie (32).

12. Dispositif selon la revendication 11, dans lequel l'éclateur (35) est de section transversale triangulaire et s'étend perpendiculairement au plan d'injection (Z) de façon que l'une de ses faces (36) soit orientée vers l'orifice de sortie (32).

13. Dispositif selon l'une quelconque des revendications 9 à 12, dans lequel les buses (21, 22, 23, 24) sont montées affleurantes à une chambre de combustion (16) et réparties sur au moins deux niveaux (A, B) pourvus chacun d'au moins une buse (21, 22, 23, 24).

14. Dispositif selon la revendication 13, comprenant un sélecteur (15) du niveau (A, B) de buses par lequel les billes d'urée sont injectées à un niveau (A, B) donné selon la température du gaz à ce niveau (A, B).

15. Dispositif selon l'une quelconque des revendications 13 et 14, comprenant des moyens d'orientation des buses par lesquelles les billes d'urée sont injectées dans le gaz selon la température du gaz mesurée.

16. Dispositif selon l'une quelconque des revendications 9 à 15, comprenant un pyromètre optique (28) qui mesure l'énergie émise par le gaz dans la longueur d'onde des NOx à partir de laquelle la température d'une zone du gaz est évaluée.

17. Dispositif selon l'une quelconque des revendications 9 à 16 comprenant des surpresseurs qui génèrent de l'air pressurisé servant notamment d'air de transport des billes d'urée vers les buses actives (21,22).

18. Dispositif selon la revendication 17, dans lequel les buses inactives (23,24) sont soit refroidies par l'air pressurisé, soit maintenues à distance des températures élevées par des moyens de retrait automatique.

19. Application du procédé selon l'une quelconque des revendications 1 à 8 et du dispositif selon l'une quelconque des revendications 9 à 18 au traitement des fumées provenant de la combustion des déchets ménagers préparés ou non.

## Claims

1. A method for reducing NOx in gases from ascending smokes flowing in a gaseous vein of a combustion chamber, **characterized in that** it comprises at least one step of evaluating or measuring an area of the gas flowing in the gaseous vein, the temperature of which is approximately comprised between 850 °C and 1000 °C, and a step of pneumatically injecting a flattened jet of urea beads oriented toward the previously evaluated and measured area of the gas.

2. The method according to claim 1, wherein the jets of urea beads each comprise at least one main cloud and two secondary clouds.

3. The method according to any of claims 1 and 2, wherein measuring the temperature of the gas consists in measuring the energy emitted by the gases for generating a temperature signal.

4. The method according to any of claims 1 and 2, wherein the evaluation of the gas temperature consists in comparing the vapor flow rate of said gas with the nominal vapor flow rate of the equipment and thereby determining the injection area of the urea beads.

5. The method according to any of the preceding claims, comprising a step of selecting the urea jets in the injection area of the gas according to the measured or evaluated temperature.

6. The method according to any of the preceding claims, wherein the urea beads are injected by means of compressed air.

7. The method according to claim 5 or 6, wherein the jets of urea beads are distributed according to at least two levels (A, B) from which one level (A, B) is selected to ensure injection of the urea beads according to the gas temperature measured or evaluated at this level.

8. The method according to claim 7 wherein the urea beads are injected via the upper level (14), either when the area of the gas, the temperature of which is comprised within 850 °C and 1000 °C, is close to this upper level (14), or when the vapor flow rate corresponds to the vapor flow rate of the nominal load or the measured vapor flow rate is lower than the nominal vapor flow rate while being greater than 80 % of this nominal vapor flow rate,
and wherein the urea beads are injected via the lower level (13), either when the area of the gas, the temperature of which is comprised between 850°C and 1000 °C, is close to this lower level (13), or when the measured vapor flow rate is lower than 80 % of the nominal vapor flow rate.

9. A device for implementing the method according to any of claims 1 to 8, **characterized in that** it comprises means for evaluating or measuring an area of the gas, the temperature of which is approximately comprised between 850°C and 1000 °C, means for injecting urea beads into this area, such means including at least one nozzle (21, 22, 23, 24), the two upper (37) and lower (38) walls of the free injection end (3) of which converge towards each other, and means for orienting the urea beads into said area.

10. The device according to claim 9, wherein the free injection end (31) of the nozzles (21, 30 22, 23, 24) has two diametrically opposed longitudinal side openings (33, 34) extending in the injection plane (Z) from the output orifice (32) of said injection end (31).

11. The device according to claim 10, wherein the free injection end (31) has a spark gap (35) allowing to generate two secondary clouds of urea jets distributed on both sides of a main cloud flowing through the output orifice (32).

12. The device according to claim 11, wherein the spark gap (35) has a triangular cross-section and extends perpendicularly to the injection plane (Z) so that one of the sides (36) thereof is oriented towards the output orifice (32).

13. The device according to any of claims 9 to 12, wherein the nozzles (21, 22, 23, 24) are mounted flush with a combustion chamber (16) and distributed over at least two levels (A, B) each provided with at least one nozzle (21, 22, 23, 24).

14. The device according to claim 13, comprising a selector (15) of the nozzle level (A, B) by which the urea beads are injected at a given level (A, B) according to the temperature of the gas at this level (A, B).

15. The device according to any of claims 13 and 14, comprising means for orienting the nozzles by which the urea beads are injected into the gas according to the measured gas temperature.

16. The device according to any of claims 9 to 15, comprising an optical pyrometer (28) measuring the energy emitted by the gas in the wavelength of the NOx from which the temperature of an area of the gas is evaluated.

17. The device according to any of claims 9 to 16, comprising superchargers generating compressed air which is mainly used as air for transporting the urea beads to the active nozzles (21, 22).

18. The device according to claim 17, wherein the inactive nozzles (23, 24) are either cooled by the compressed air or kept away from high temperatures by automatic withdrawal means.

19. Application of the method according to any of claims 1 to 8 and of the device according to any of claims 9 to 18 to the treatment of smokes resulting from the combustion of prepared or unprepared household waste.

## Patentansprüche

1. Verfahren zur Reduzierung von NOx in Gasen aus aufsteigenden Schwaden, die in einem Gasgemisch einer Brennkammer umlaufen, **dadurch gekennzeichnet, dass** es mindestens einen Schritt des Einschätzens oder Messens eines Bereichs des Gases, das in dem Gasgemisch umläuft, dessen Temperatur ungefähr zwischen 850 °C und 1000 °C liegt, und einen Schritt des pneumatischen Einblasens eines abgeflachten Strahls von Harnstoffperlen, der auf den zuvor eingeschätzten und gemessenen Gasbereich orientiert ist, umfasst.

2. Verfahren nach Anspruch 1, wobei die Strahlen von Harnstoffperlen jeweils mindestens eine Hauptfahne und zwei Nebenfahnen umfassen.

3. Verfahren nach einem der Ansprüche 1 und 2, wobei das Messen der Temperatur des Gases darin besteht, die Energie zu messen, die von den Gasen abgegeben wird, um ein Temperatursignal zu erzeugen.

4. Verfahren nach einem der Ansprüche 1 und 2, wobei die Einschätzung der Temperatur des Gases darin besteht, die Dampfleistung des Gases mit der Sollwert-Dampfleistung der Anlage zu vergleichen und dadurch den Bereich zum Einblasen der Harnstoffperlen zu bestimmen.

5. Verfahren nach einem der vorhergehenden Ansprüche, umfassend einen Schritt des Auswählens der Harnstoffstrahlen in dem Bereich zum Einblasen des Gases gemäß der gemessenen oder eingeschätzten Temperatur.

6. Verfahren nach einem der vorhergehenden Ansprüche, wobei die Harnstoffperlen mittels Druckluft eingeblasen werden.

7. Verfahren nach Anspruch 5 oder 6, wobei die Strahlen von Harnstoffperlen gemäß mindestens zwei Stufen (A, B) verteilt sind, von denen eine Stufe (A, B) ausgewählt wird, um das Einblasen der Harnstoffperlen gemäß der auf dieser Stufe gemessenen oder eingeschätzten Gastemperatur sicherzustellen.

8. Verfahren nach Anspruch 7, wobei die Harnstoffperlen über die obere Stufe (14) eingeblasen werden, entweder wenn der Bereich des Gases, dessen Temperatur zwischen 850 °C und 1000 °C liegt, nahe an dieser oberen Stufe (14) liegt, oder wenn die Dampfleistung der Dampfleistung der Sollwertlast entspricht, oder die gemessene Dampfleistung geringer als die Sollwert-Dampfleistung und dabei größer als 80 % dieser Sollwert-Dampfleistung ist,
und wobei die Harnstoffperlen über die untere Stufe (13) eingeblasen werden, entweder wenn der Gasbereich, dessen Temperatur zwischen 850 °C und 1000 °C liegt, nahe an dieser unteren Stufe (13) liegt, oder wenn die gemessene Dampfleistung geringer ist als 80 % der Sollwert-Dampfleistung.

9. Vorrichtung zum Umsetzen des Verfahrens nach einem der Ansprüche 1 bis 8, **dadurch gekennzeichnet, dass** sie Mittel zum Einschätzen oder Messen eines Bereichs des Gases, dessen Temperatur ungefähr zwischen 850 °C und 1000 °C liegt, Mittel zum Einblasen von Harnstoffperlen in diesen Bereich, wobei diese Mittel mindestens eine Düse (21, 22, 23, 24) umfassen, deren beide obere (37) und untere (38) Wände des freien Einblasendes (3) aufeinander zu laufen, und Mittel zum Orientieren der Harnstoffperlen in diesem Bereich umfasst.

10. Vorrichtung nach Anspruch 9, wobei das freie Einblasende (31) der Düsen (21, 30 22, 23, 24) zwei sich diametral gegenüber stehende Längsseitenöffnungen (33, 34) umfasst, die sich in der Einblasebene (Z) von der Ausgangsmündung (32) des Einblasendes (31) aus erstrecken.

11. Vorrichtung nach Anspruch 10, wobei das freie Einblasende (31) eine Funkenstrecke (35) umfasst, die es ermöglicht, zwei Nebenfahnen von Harnstoffstrahlen zu erzeugen, die auf beiden Seiten einer Hauptfahne verteilt sind, die durch die Ausgangsmündung (32) geht.

12. Vorrichtung nach Anspruch 11, wobei die Funkenstrecke (35) einen dreieckigen Querschnitt aufweist und sich rechtwinklig zu der Einblasebene (Z) erstreckt, so dass eine ihrer Seiten (36) in Richtung auf die Ausgangsmündung (32) orientiert ist.

13. Vorrichtung nach einem der Ansprüche 9 bis 12, wobei die Düsen (21, 22, 23, 24) mit einer Brennkammer (16) bündig montiert sind und über mindestens zwei Stufen (A, B) verteilt sind, die jeweils mit mindestens einer Düse (21, 22, 23, 24) versehen sind.

14. Vorrichtung nach Anspruch 13, umfassend einen Wählschalter (15) der Düsenstufe (A, B), von der die Harnstoffperlen auf einer bestimmten Stufe (A, B) gemäß der Temperatur des Gases auf dieser Stufe (A, B) eingeblasen werden.

15. Vorrichtung nach einem der Ansprüche 13 und 14, umfassend Mittel zum Orientieren der Düsen, durch welche die Harnstoffperlen in das Gas gemäß der gemessenen Gastemperatur eingeblasen werden.

16. Vorrichtung nach einem der Ansprüche 9 bis 15, umfassend ein optisches Pyrometer (28), das die Energie misst, die von dem Gas auf der Wellenlänge der NOx-Emissionen abgegeben wird, von der aus die Temperatur eines Gasbereichs abgeschätzt wird.

17. Vorrichtung nach einem der Ansprüche 9 bis 16, umfassend Vorverdichter, die Druckluft erzeugen, die insbesondere als Luft zum Transport der Harnstoffperlen zu den aktiven Düsen (21, 22) dient.

18. Vorrichtung nach Anspruch 17, wobei die inaktiven Düsen (23, 24) entweder durch Druckluft gekühlt werden oder durch automatische Rückzugmittel von den hohen Temperaturen entfernt gehalten werden.

19. Anwendung des Verfahrens nach einem der Ansprüche 1 bis 8 und der Vorrichtung nach einem der Ansprüche 9 bis 18 auf die Behandlung der Schwaden, die aus der Verbrennung von behandeltem oder unbehandeltem Haushaltsabfall stammen.
